# EUROPEAN PATENT SPECIFICATION

(11) **EP 1 777 140 B1**
(45) Date of publication and mention of the grant of the patent: **27.01.2010**
(21) Application number: 05257816.8
(22) Date of filing: 19.12.2005
(51) Int. Cl.: B62D 5/04

(54) **Tensioner for belt-type transmission and electric power steering apparatus having the same**
Riemenspanner für eine elektrische Servolenkung mit Riemenantrieb
Tendeur pour entraînement à courroie pour direction assistée électrique

(30) Priority: 19.10.2005 KR 2005098474
(43) Date of publication of application: 25.04.2007
(73) Proprietor: Mando Corporation, Pyeongtaek-si, Gyeonggi-do (KR)
(72) Inventor: Jo, Heegwon, Gyeonggi-do (KR); Joo, Namgung, Gangwon-do (KR); Song, Jun-gyu 1102-504, Geum-gang APT.,, Gyeongg-do (KR)
(74) Representative: Neobard, William John

(56) References cited:
- EP-A- 1 553 006
- US-A- 3 026 737
- US-A1- 2003 104 889
- PATENT ABSTRACTS OF JAPAN vol. 2003, no. 12, 5 December 2003 (2003-12-05) -& JP 2003 291830 A (HONDA MOTOR CO LTD), 15 October 2003 (2003-10-15)
- PATENT ABSTRACTS OF JAPAN vol. 2003, no. 12, 5 December 2003 (2003-12-05) -& JP 2003 220958 A (KOYO SEIKO CO LTD; GATES UNITTA ASIA CO), 5 August 2003 (2003-08-05)

## Description

The present invention relates to a belt-type transmission and to an electric power steering apparatus of an automobile having the same. Embodiments relate to a belt-type transmission having a tensioner arranged inside and in contact with a belt, which connects a drive shaft to a driven shaft, in order to adjust the tension of the belt without additional support structure for the tensioner, thereby reducing the number of parts and saving manufacturing cost, as well as an electric power steering apparatus having the same.

Although hydraulic power steering apparatuses which function by way of a hydraulic pump are generally used the a power steering apparatus of an automobile, the use of electric power steering apparatuses which function by way of an electric motor has been gradually on the rise since the 1990s.

A conventional hydraulic power steering apparatus has a hydraulic pump or a steering power source actuated by an engine, and thus consumes energy incessantly, irrespective of the rotation of a steering wheel. In an electric power steering apparatus, an electric motor supplies steering power in proportion to steering torque, when it is generated by the rotation of a steering wheel. Accordingly, the use of the electric power steering apparatus can enhance energy efficiency when it is used instead of the hydraulic power steering apparatus.

EP 1553006 describes an electric power steering device. This document describes a rack assist type electric power steering apparatus which is provided with a ball screw mechanism having a rack shaft and a ball nut, the ball screw mechanism supporting the rack shaft in such a way that the rack shaft can be moved in the axial direction by rotation of the ball nut. This document further describes a drive pulley rotating integrally with the shaft of an electric motor for power aid, a driven pulley rotating integrally with said ball nut and a belt looped around the drive pulley and the driven pulley, wherein adjustment of the tension of the belt can be effected appropriately and easily. In Figure 35, the central axis of the motor flange is offset from the central axis of the motor and the motor flange can be revolved relative to the motor holding ball such that the distance between the centre of the drive pulley and the centre of the driven pulley can be changed. Figure 43 shows a tension roller adapted to be moved back and forth relative to the web surface of the camming belt, there is provided a roller holder rotatably holding the tension roller and a roller pressing mechanism for pressing the tension roller against the timing belt for avoiding a tension adjusting means.

JP 2003220958 describes an electric power steering device. The disclosed device addresses the problem that causes decrease in a winding amount of a belt to a small pulley and deterioration of durability when a small diametered pulley is militarised in order to increase a reduction ratio in the case of reducing the speed using with a pulley-belt mechanism wound the belt around a small and a large diametered pulley. Such a problem is typically encountered in a back assist electric type power steering device. This document describes a system where by tension is loaded to a cogged belt by pressing the slack side of the belt towards the tension side of the belt with a tension pulley which is energised by an energising member. This extends the winding of the belt on the small diameter pulley. That is, the number of keeping gauging with the belt in the small diameter pulley increase.

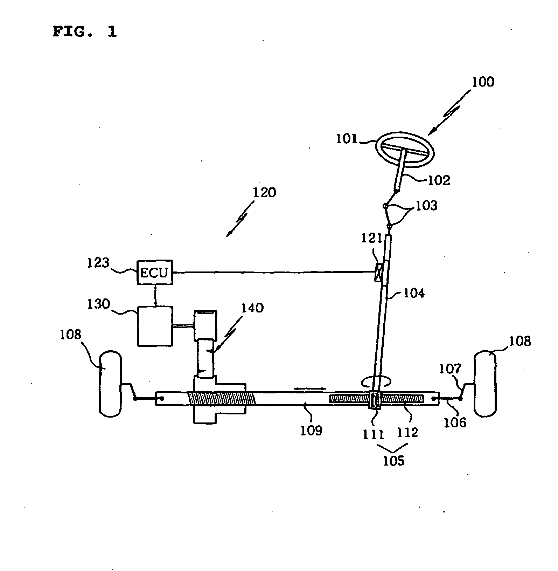

As shown in FIG. 1, electric power steering apparatus generally includes a steering system 100 starting from a steering wheel 101 to both wheels 108, as well as a steering power mechanism 120 for supplying steering power to the steering system 100.

The steering system 100 includes a steering shaft 102 with the top connected to the steering wheel 101, such that the steering shaft 102 can be rotated along with the steering wheel 101. The steering shaft 102 is also connected at the bottom to a pinion shaft 104 via a pair of universal joints 103. The pinion shaft 104 is connected to a rack bar 109 via a rack-pinion mechanism 105, and both ends of the rack bar 109 are connected to the wheels 108 of the vehicle via tie rods 106 and knuckle arms 107.

The rack-pinion mechanism 105 includes a pinion gear 111 and a rack gear 112 meshed with each other, in which the pinion gear 111 is provided at the bottom of the pinion shaft 104 and the rack gear 112 is formed on the rack bar 109. The rack-pinion mechanism 105 converts the rotation of the pinion shaft 104 into the linear movement of the rack bar 109. Accordingly, when a driver manipulates the steering wheel 101, the pinion shaft 104 is rotated giving linear movement to the rack bar 109, which in turn steers the wheels 108 via the tie rods 106 and the knuckle arms 107.

The steering power mechanism 120 includes a torque sensor 121 for the detection of steering torque applied to the steering wheel by a driver. The torque sensor produces an electric signal in proportion to the detected steering torque. The steering power mechanism 120 also includes an Electronic Control Unit (ECU) 123 for generating a control signal in response to the electric signal from the torque sensor 121; a motor for generating steering power in response to the control signal from the ECU 123; and a belt-type transmission 140 for transmitting steering power from the motor 130 to the rack bar 109 via a belt.

Accordingly, the electric power steering apparatus is constructed so that the steering torque generated by the rotation of the steering wheel 101 is delivered to the rack bar 109 through the rack-pinion mechanism 105; and the steering power generated by the motor 130 in response to the steering torque is delivered to the rack bar 109 via the belt-type transmission 140. That is, the steering torque generated by the steering system 100 is combined with the steering power generated by the motor 130 to make the rack bar 109 move along the axis.

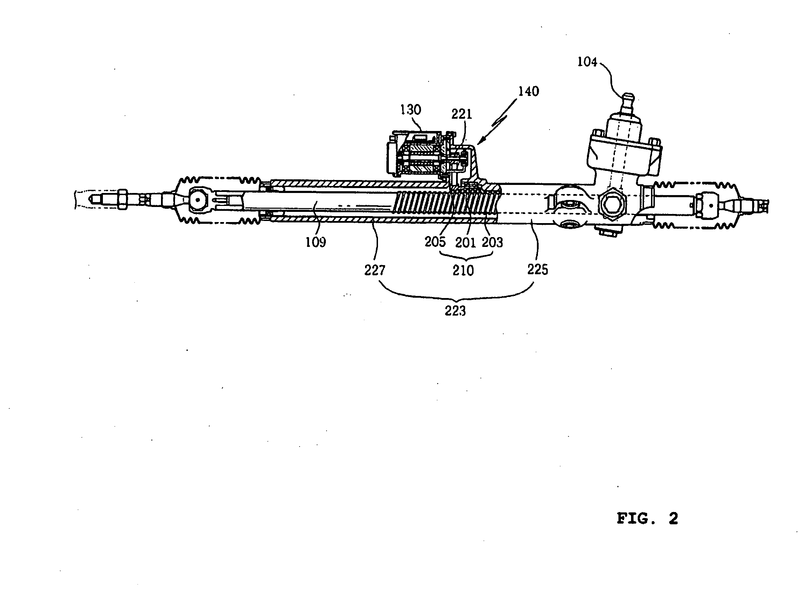

As shown in FIG. 2, the conventional electric power steering apparatus of an automobile includes a rack bar 109 extended across the vehicle with a rack gear formed on the outer periphery thereof, a pinion shaft 104 having a pinion gear meshed with the rack gear, a ball screw 210 having a ball nut 204 meshed with the ball screw 203 via balls 201, a belt-type transmission 140 connecting the ball nut 205 to a motor shaft 221 and a motor 130.

The pinion shaft 104 is connected to a steering wheel via a steering shaft, and the rack bar 109, having a predetermined length of screw formed on the outer periphery, is received in a rack housing 223. Furthermore, the rack housing 223 includes a first housing 225 in the rack gear side and a second housing 227 in the motor side.

The belt-type transmission 140 includes a belt for connecting the motor shaft 221 with the ball nut 205. With the belt-type transmission 140, steering power is generated by the motor 130 in proportion to steering torque applied to the steering wheel, and then is transmitted to the rack bar 109 via the ball nut 205.

The belt-type transmission 140 is advantageous as it prevents any vibration or impact of the rack bar 109 from directly propagating to the motor 130. However, as a drawback, change in belt tension caused by abrasion of the belt or pulley creates vibration in the belt, which in turn propagates to an automobile body making noises.

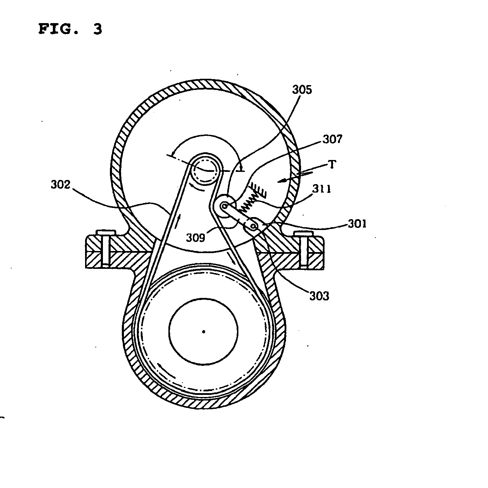

As an approach to overcome such a trouble in the art, a tensioner T which abuts against the outer surface of a belt is installed and adjusts the belt tension as shown in FIG. 3.

The tensioner T of the prior art includes a support protrusion 301 projected from a motor housing, a first support shaft 303 extended through the support protrusion 301, a tensioner pulley 305 spaced from the support protrusion 301 at a predetermined distance, a second support protrusion 307 extended through the tensioner pulley 305, a swing arm 309 connecting the first support shaft 303 to the second support shaft 307 and a torsion spring 311 pushing against the swing arm 309 in one direction.

The conventional tensioner T of this construction adjusts the tension of a belt 302 with the torsion spring 311, which applies spring force to the swing arm 309 to push against the belt 302 from outside to inside.

However, there is a disadvantage in that the conventional approach needs a number of additional parts for the tensioner T, which complicates the fabrication process, and results in the increase of manufacturing cost.

It is an object of embodiments of the invention to at least partly avoid problems of the prior art.

In one aspect there is provided a belt-type transmission including a rotatable drive shaft; a drive pulley coupled with the drive shaft; a rotatable driven shaft spaced from the drive shaft at a predetermined distance; a driven pulley coupled with the driven shaft; a belt connecting the drive shaft to the driven shaft; and a tensioner arranged inside and in contact with the belt.

In another aspect there is provided an electric power steering apparatus of an automobile including a pinion shaft connected to a steering wheel of the vehicle, and having a pinion gear formed on one end; a rack bar connected to both wheels of the vehicle, and having a rack gear formed in one end part to mesh with the pinion gear and a ball screw formed in the other end part; a motor for generating steering power in proportion to steering torque generated by the steering wheel; a motor pulley coupled with a motor shaft of the motor; a ball nut meshing with the ball screw of the rack bar via a ball; a ball nut pulley provided on an outer periphery of the ball nut; a belt connecting the motor pulley to the ball nut pulley; and a tensioner arranged inside and in contact with the belt.

Embodiments of the invention are now described by way of example only in conjunction with the accompanying drawings, in which:
FIG. 1 is a diagram of a conventional electric power steering apparatus of an automobile;
FIG. 2 is a side-elevational view of a conventional electric power steering apparatus of an automobile, illustrating it partially in cross-section;
FIG. 3 is a cross-sectional view of a conventional tensioner;
FIG. 4 is a perspective view of a belt-type transmission embodying the invention;
FIG. 5 is a front elevational view of the belt-type transmission shown in FIG. 4;
FIG. 6a is a diagram of an electric power steering apparatus embodying the invention;
FIG. 6b is a magnified view of the electric power steering apparatus shown in FIG. 6a, whose illustration is partially in cross section; and
FIG. 7 is a cross-sectional view taken along the line A-A' in FIG. 6b.

In the following description and drawings, like reference signs indicate like parts.

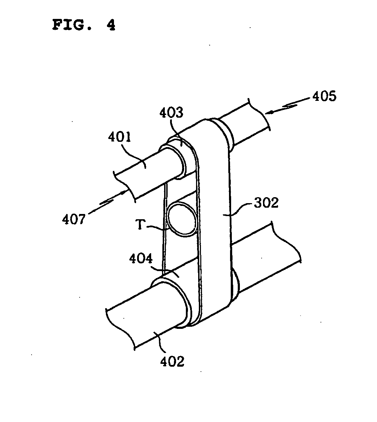

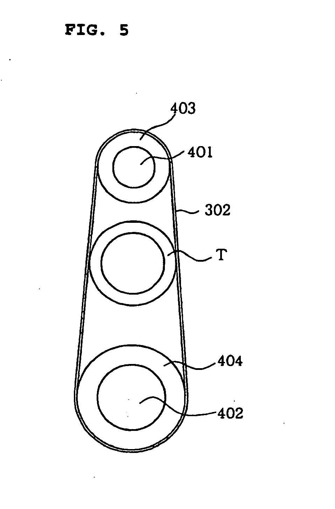

As shown in FIGS. 4 and 5, a belt-type electric power transmission includes a rotatable drive shaft 401, a drive pulley 403 coupled with the drive shaft 401, a rotatable driven shaft 402 spaced from the drive shaft 401 to a predetermined distance, a driven pulley 404 coupled with the driven shaft 402, a belt 302 connecting the drive shaft 401 to the driven shaft 402 and a tensioner T abutting against the inner periphery of the belt 302.

The drive shaft 401 is a cylindrical rotary shaft having a predetermined diameter, which delivers input rotational force to the driven shaft 402. An actuator such as a motor is connected to the input side 405 of the drive shaft 401 to rotate the drive shaft 401.

The drive pulley 403 is configured to surround the outer periphery of the output side 407 of the rotary shaft 401, and the belt 302 moves in contact with the outer periphery of the drive pulley 403 to transmit rotational force from the drive shaft 401 to the driven shaft 402. The drive pulley 403 may be provided integral to the drive shaft 401, and protrusions may be formed on the outer periphery of the drive pulley 403 and the inner periphery of the belt 302 so that the belt 302 can have secure contact with the drive pulley 403.

The driven shaft 402 functions to output rotational force delivered from the drive shaft 401. The driven shaft 402 is spaced from the drive shaft 401 at a predetermined distance to receive rotational force from the drive shaft 401.

The driven pulley 404 is configured to surround the outer periphery of the driven shaft 402, and serves to deliver rotational force from the belt 302 to the driven shaft 402 as the belt 302 connected to the drive shaft 401 moves in contact with the outer periphery of the driven pulley 404.

The belt 302 connects the drive shaft 401 to the driven shaft 402 to deliver rotational force from the drive shaft 401 to the driven shaft 402. The belt 302 may be provided by one or more, and made of various materials such as metal and plastic. The belt 302 may also be provided on the inner periphery with protrusions that mesh with protrusions of the drive shaft 401 and/or the driven shaft 402.

The tensioner T has a cylindrical configuration, in contact with the inner periphery of the belt 302. The tensioner T may also be made hollow to reduce its weight. In an embodiment, the tensioner T has a diameter larger than the width of the belt 302 without making inside-contact with the tensioner T (herein the term "inside-contact" means that the tensioner T is arranged inside and in contact with the belt 302), such that the tensioner T installed inside the belt 302 can push against the inner periphery of the belt 302 to make the belt 302 tight.

As installed to contact the inner periphery of the belt 302, the tensioner T can maintain a fixed position at all times owing to rotational force from both sides of the belt 302 that move in opposite direction. As a result, the tensioner T of this invention does not need additional support structure unlike conventional tensioners which are configured to contact the outside surface of the belt. Therefore, the invention can advantageously reduce the number of parts and simplify the manufacturing process, thereby saving manufacturing cost.

The tensioner T may also be made of elastic material such as plastic in order to cope with the loosening of the belt owing to the abrasion of the inner periphery of the belt 302 or the outer periphery of the tensioner T. Then, even though the belt 302 loosens owing to abrasion, the elastic force of the tensioner T originating from its elasticity pushes the belt 302 outward so that the belt 302 can maintain its tension.

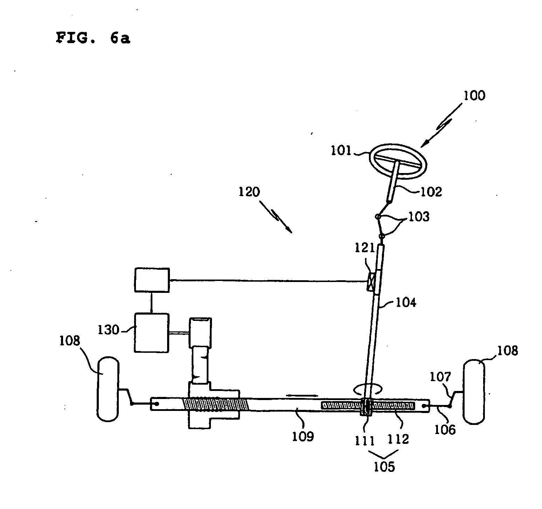

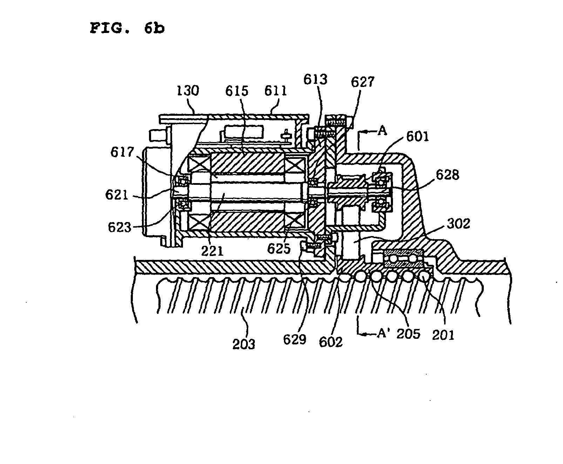

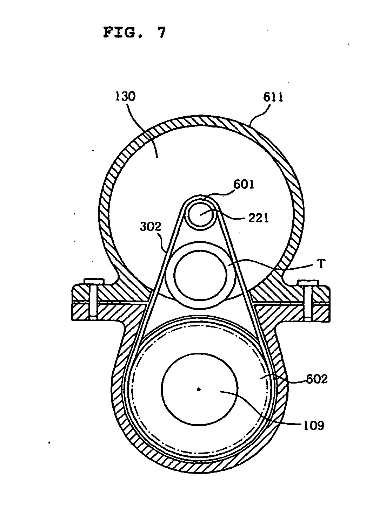

As shown in FIGS. 6a, 6b and 7, an electric power steering apparatus includes a steering wheel 101, a pinion shaft 104 connected to the steering wheel 101, having a pinion gear 111 formed at the bottom thereof, a rack bar 109 connected to both wheels 108 and having a rack gear 112, which is formed at one part thereof and meshed with the pinion gear 111, a motor 130 for generating steering power in proportion to steering torque generated by the steering wheel 101, a motor pulley 601 coupled with the motor shaft 221, a ball nut 205 meshed with a ball screw 203 of the back bar 109 via balls 201, a ball nut pulley 602 arranged on the outer periphery of the ball nut 205, a belt 302 connecting a motor pulley 601 to a ball nut pulley 602 and a tensioner T contacting the inner periphery of the belt 302.

The pinion shaft 104 is connected to the steering wheel 101 via a steering shaft 102, and the pinion gear 111 is formed at the bottom of the pinion shaft 104.

The rack bar 109 is received in a rack housing, and connected at both ends to wheels 108 via tie rods 106 and knuckle arms 107. The rack gear 112 is formed on one part of the rack bar 109, and is meshed with the pinion gear 111. Also, seals for preventing the leakage of lubricant are provided at predetermined portions of the rack bar 109 inside from the both ends.

The rack bar 109 receives, at one side, power from the motor shaft 221 via the belt 302. In the outer periphery at the other side of the rack bar 109, a spiral groove is extended to a predetermined length, forming the ball screw 203.

The ball nut 205 meshes with the ball screw 203 via the balls 201, surrounding the outer periphery of the rack bar 109.

The ball nut pulley 602 is arranged on the outer periphery of the ball nut 205, connecting the belt 302 to the ball nut 205. The ball nut pulley 602 may also be made integral with the ball nut 205. Furthermore, protrusions may be formed on the outer periphery of the ball nut pulley 602.

The motor 130 includes a motor housing 611, a cover 613 that closes an opened end of the motor housing 611, a cylindrical stator 615 received in the motor housing 611, a rotor 617 arranged inside the stator 615 and the motor shaft 221 which is coupled integrally with the rotor 617.

The motor shaft 221 is arranged to be parallel with the rack bar 109, with a left end 621 rotatably supported by a first bearing 623 installed in the motor housing 611 and a middle part rotatably supported by a second bearing 627 installed in the cover 613. The cover 613 is also coupled with the motor housing 611 via bolts 629.

The motor pulley 601 is arranged on a right end 628 of the motor shaft 221 and the belt 302 is connected to the motor pulley 601 so that steering power generated by the motor 130 can be transmitted to the rack bar 109. The motor pulley 601 may be made integral with the motor shaft 221. Furthermore, protrusions may be formed on the outer periphery of the motor pulley 601.

The belt 302 connects the motor pulley 601 to the ball nut pulley 602 to transmit steering power from the motor 130 to the rack bar 109. If necessary, protrusions may be formed on the inner periphery of the belt 302 to mesh with protrusions formed on the outer periphery of the motor pulley 601 or the ball nut pulley 602 so that the belt 302 can be driven in tight contact with the motor pulley 601 or the ball nut pulley 602.

The tensioner T contacts the inner periphery of the belt 302 as in the first embodiment in order to push the belt 302 outward so that the belt 302 can maintain its tension.

Since other components have the same construction and operation as those of the first embodiment, the same reference signs are used to designate the same or similar components without detailed description thereof.

If the tensioner is provided inside and in contact with the belt without additional support structure in order to adjust belt tension, this can advantageously reduce the number of parts and simplify manufacturing process, thereby saving manufacturing cost.

Embodiments of the invention have now been described. The invention itself however is not restricted to the described features but is only limited by the following claims.

## Claims

1. A belt-type transmission comprising:
a rotatable drive shaft (401);
a drive pulley (403) coupled with the drive shaft (401);
a rotatable driven shaft (402) spaced from the drive shaft (401) at a predetermined distance;
a driven pulley (404) coupled with the driven shaft (402);
a belt (302) connected between the drive shaft (401) and the driven shaft (402); and
a tensioner (T) arranged inside and in contact with the belt (302), both sides of the tensioner (T) directly connected with both sides of the belt (302) that move in opposite directions.

2. A belt-type transmission according to claim 1, wherein the drive pulley (403) has protrusions on an outer periphery, the driven pulley (404) has protrusions on an outer periphery, the protrusions of the driven pulley (404) being configured in an identical way to the protrusions of the drive pulley (403), and the belt (302) has protrusions on an inner periphery, meshing with the protrusions of the drive pulley (403) and the driven pulley (404).

3. A belt-type transmission according to claim 1, wherein the tensioner (T) has a width larger than an inner width of the belt (302) before the tensioner (T) is arranged inside and in contact with the belt (302).

4. A belt-type transmission according to claim 1 or 3, wherein the tensioner (T) is made of elastic material.

5. A belt-type transmission according to claim 4, wherein the tensioner (T) is made of plastic.

6. An electric power steering apparatus of an automobile comprising:
a pinion shaft (104) connected to a steering wheel (101) of the vehicle, and having a pinion gear (111) formed on one end;
a rack bar (109) connected to both wheels of the vehicle, and having a rack gear (112) formed in one end portion to mesh with the pinion gear (111) and a ball screw (203) formed in the other end portion;
a motor (130) for generating steering power in proportion to steering torque generated by the steering wheel (101);
a motor pulley (601) coupled with a motor shaft (221) of the motor (130);
a ball nut (205) meshing with the ball screw (203) of the rack bar (109) via a ball (201);
a ball nut pulley (602) provided on an outer periphery of the ball nut (205);
a belt (302) connected between the motor pulley (601) and the ball nut pulley (602); and
a tensioner (T) arranged inside and in contact with the belt (302), both sides of the tensioner (T) directly connected with both sides of the belt (302) that move in opposite directions.

7. An electric power steering apparatus according to claim 6, wherein the motor pulley (601) has protrusions on an outer periphery, the ball nut pulley (602) has protrusions on an outer periphery, the protrusions of the ball nut pulley (602) being configured an identical way to the protrusions of the motor pulley (601), and the belt (302) has protrusions on an inner periphery, meshing with the protrusions of the motor pulley (601) and the ball nut pulley (602).

8. An electric power steering apparatus according to claim 7, wherein the tensioner (T) has a width larger than an inner width of the belt (302) before the tensioner (T) is arranged inside and in contact with the belt (302).

9. An electric power steering apparatus according to claim 6 or 8, wherein the tensioner (T) is made of elastic material.

## Patentansprüche

1. Riemengetriebe mit:
einer drehbaren Antriebswelle (401);
einer Antriebsriemenscheibe (403), die mit der Antriebswelle (401) verbunden ist,
einer drehbaren angetriebenen Welle (402), die von der Antriebswelle (401) mit einer vorbestimmten Distanz beabstandet ist;
einer angetriebenen Riemenscheibe (404), die mit der angetriebenen Welle (402) verbunden ist;
einem Riemen (302), der zwischen der Antriebswelle (401) und der angetriebenen Welle (402) verbunden ist; und
einem Spanner (T), der innen angeordnet ist und den Riemen (302) kontaktiert, wobei beide Seiten des Spanners (T) direkt mit den beiden Seiten des Riemens (302) verbunden sind, die sich in entgegengesetzter Richtung bewegen.

2. Riemengetriebe nach Anspruch 1, wobei die Antriebsriemenscheibe (403) Vorsprünge an einem äußeren Umfang aufweist, die angetriebene Riemenscheibe (404) Vorsprünge an einem äußeren Umfang aufweist, wobei die Vorsprünge der angetriebenen Riemenscheibe (404) ident zu den Vorsprüngen der Antriebsriemenscheibe (403) ausgeführt sind, und der Riemen (302) an einem inneren Umfang Vorsprünge aufweist, die in die Vorsprünge der Antriebsriemenscheibe (403) und der angetriebenen Riemenscheibe (404) eingreifen.

3. Riemengetriebe nach Anspruch 1, wobei der Spanner (T) eine Breite aufweist, die größer als die Innenbreite des Riemens (302) ist, bevor der Spanner (T) innen und in Kontakt mit dem Riemen (302) angeordnet wird.

4. Riemengetriebe nach Anspruch 1 oder 3, wobei der Spanner (T) aus elastischem Material besteht.

5. Riemengetriebe nach Anspruch 4, wobei der Spanner (T) aus Plastik besteht.

6. Servolenkung eines Fahrzeugs mit:
einer Ritzelwelle (104), die mit dem Lenkrad (101) des Fahrzeugs verbunden ist und ein an einem Ende gebildetes Ritzel (111) aufweist;
einer Zahnstange (109), die mit beiden Rädern des Fahrzeugs verbunden ist und einen Zahntrieb (112) aufweist, der in einem Endteil gebildet ist, um in den Ritzel (111) und in einen im anderen Endteil gebildeten Kugelgewindetrieb (203) einzugreifen;
einem Motor (130) zum Generieren von Lenkkraft in Proportion zum Lenkdrehmoment, das durch das Steuerrad (101) generiert wird;
einer Motorriemenscheibe (601), die mit einer Motorwelle (221) des Motors (130) verbunden ist;
einer Kugelmutter (205), die in den Kugelgewindetrieb (203) der Zahnstange (109) über eine Kugel (201) eingreift;
einer Kugelmutterriemenscheibe (602), die am äußeren Umfang der Kugelmutter (205) vorgesehen ist;
einem Riemen (302), der zwischen der Motorriemenscheibe (601) und der Kugelmutterriemenscheibe (602) verbunden ist; und
einem Spanner (T), der innen angeordnet ist und den Riemen (302) kontaktiert, wobei beide Seiten des Spanners (T) direkt mit den beiden Seiten des Riemens (302) verbunden sind, die sich in entgegengesetzter Richtung bewegen.

7. Servolenkung nach Anspruch 6, wobei die Motorriemenscheibe (601) an einem äußeren Umfang Vorsprünge aufweist, die Kugelmutterriemenscheibe (602) an einem äußeren Umfang Vorsprünge aufweist, wobei die Vorsprünge der Kugelmutterriemenscheibe (602) ident zu den Vorsprüngen der Motorriemenscheibe (601) ausgeführt sind, und der Riemen (302) an einem inneren Umfang Vorsprünge aufweist, die in die Vorsprünge der Motorriemenscheibe (601) und den Kugelmutterriemenscheibe (602) eingreifen.

8. Servolenkung nach Anspruch 7, wobei der Spanner (T) eine Breite aufweist, die größer als die Innenbreite des Riemens (302) ist, bevor der Spanner (T) innen und in Kontakt mit dem Riemen (302) angeordnet wird.

9. Servolenkung nach Anspruch 6 oder 8, wobei der Spanner (T) aus elastischem Material besteht.

## Revendications

1. Transmission du type à courroie, comprenant :
un arbre d'entraînement rotatif (401) ;
une poulie d'entraînement (403) couplée à l'arbre d'entraînement (401) ;
un arbre rotatif entraîné (402) espacé de l'arbre d'entraînement (401) à une distance prédéterminée ;
une poulie entraînée (404) couplée à l'arbre entraîné (402) ;
une courroie (302) raccordée entre l'arbre d'entraînement (401) et l'arbre entraîné (402) ; et
un dispositif tendeur (T) aménagé à l'intérieur et au contact de la courroie (302), les deux côtés du dispositif tendeur (T) étant directement raccordés aux deux côtés de la courroie (302) qui se déplacent dans des sens opposés.

2. Transmission du type à courroie selon la revendication 1, dans laquelle la poulie d'entraînement (403) présente des saillies sur une périphérie externe, la poulie entraînée (404) présente des saillies sur une périphérie externe, les saillies de la poulie entraînée (404) étant configurées de manière identique aux saillies de la poulie d'entraînement (403) et la courroie (302) présente des saillies sur une périphérie interne, qui s'engrènent sur les saillies de la poulie d'entraînement (403) et de la poulie entraînée (404).

3. Transmission du type à courroie selon la revendication 1, dans laquelle le dispositif tendeur (T) a une largeur plus grande qu'une largeur interne de la courroie (302) avant que le dispositif tendeur (T) ne soit aménagé à l'intérieur et au contact de la courroie (302).

4. Transmission du type à courroie selon la revendication 1 ou 3, dans laquelle le dispositif tendeur (T) est constitué d'un matériau élastique.

5. Transmission du type à courroie selon la revendication 4, dans laquelle le dispositif tendeur (T) est constitué d'un matériau synthétique.

6. Appareil de conduite électrique assistée d'une automobile, comprenant :
un arbre de pignon (104) raccordé à un volant de direction (101) du véhicule et ayant un pignon (111) formé à une extrémité ;
une barre à crémaillère (109) raccordée aux deux roues du véhicule et ayant un engrenage à crémaillère (112) formé dans une partie d'extrémité pour s'engrener sur le pignon (111) et une vis à bille (203) formée dans l'autre partie d'extrémité ;
un moteur (130) pour générer de l'énergie de conduite en proportion du couple de conduite généré par le volant de direction (101) ;
une poulie motrice (601) couplée à un arbre moteur (221) du moteur (130) ;
un écrou sphérique (205) s'engrenant sur la vis à bille (203) de la barre à crémaillère (109) via une bille (201) ;
une poulie d'écrou sphérique (602) aménagée sur une périphérie externe de l'écrou sphérique (205) ;
une courroie (302) raccordée entre la poulie motrice (601) et la poulie d'écrou sphérique (602) ; et
un dispositif tendeur (T) aménagé à l'intérieur et au contact de la courroie (302), les deux côtés du dispositif tendeur (T) étant directement raccordés aux deux côtés de la courroie (302) qui se déplacent dans des sens opposés.

7. Appareil de conduite électrique assistée selon la revendication 6, dans lequel la poulie motrice (601) présente des saillies sur une périphérie externe, la poulie d'écrou sphérique (602) présente des saillies sur une périphérie externe, les saillies de la poulie d'écrou sphérique (602) étant configurées de manière identique aux saillies de la poulie motrice (601), et la courroie (302) présente des saillies sur une périphérie interne, qui s'engrènent sur les saillies de la poulie motrice (601) et de la poulie d'écrou sphérique (602).

8. Appareil de conduite électrique assistée selon la revendication 7, dans lequel le dispositif tendeur (T) a une largeur plus grande qu'une largeur interne de la courroie (302) avant que le dispositif tendeur (T) ne soit aménagé à l'intérieur et au contact de la courroie (302).

9. Appareil de conduite électrique assistée selon la revendication 6 ou 8, dans lequel le dispositif tendeur (T) est constitué d'un matériau élastique.
